# EUROPEAN PATENT SPECIFICATION

(11) **EP 0 419 199 B1**
(45) Date of publication and mention of the grant of the patent: **06.03.1996**
(21) Application number: 90310179.8
(22) Date of filing: 18.09.1990
(51) Int. Cl.: G02B 27/00

(54) **Heads-up display**
Head-up Display
Afficheur tête haute

(30) Priority: 19.09.1989 JP 240706/89; 08.12.1989 JP 319702/89
(43) Date of publication of application: 27.03.1991
(73) Proprietor: FUJITSU LIMITED, Kawasaki-shi, Kanagawa 211 (JP)
(72) Inventor: Matsumoto, Tsuyoshi, Atsugi-shi, Kanagawa 243 (JP); Watanabe, Reiko, Kani-shi, Gifu 509-02 (JP); Eguchi, Shin, Isehara-shi, Kanagawa 259-11 (JP); Aritake, Hirokazu, Isehara-shi, Kanagawa 259-11 (JP); Morihara, Takashi, Kawasaki-shi, Kanagawa 214 (JP); Yamagishi, Fumio, Ebina-shi, Kanagawa 243-04 (JP)
(74) Representative: Billington, Lawrence Emlyn

(56) References cited:
- EP-A- 0 157 958
- EP-A- 0 200 022
- DE-A- 1 115 657
- GB-A- 2 123 657
- US-A- 3 915 548
- PROCEEDINGS OF THE IEEE 1981 NATIONAL AEROSPACE AND ELECTRONICS CONFERENCE, Dayton, 19th-21st May 1981, vol. 3, pages 1261-1268; R.L. BERRY et al.: "The LANTIRN wide field-of-view raster head-up display"

## Description

The present invention relates to a head-up display through which an information image superimposed on a background image of an outside scene can be viewed.

It is known to use a head-up display in aircraft or other vehicles to observe various information, such as speed, position, the quantity of remaining fuel, etc., of the aircraft or vehicle, against the background of the outside scene. An operator (viewer) can view information while viewing the background scene on which the information image is superimposed in the head-up display (which will be referred to as an HUD hereinafter) at the same time, substantially without moving the eyes.

Two types of head-up displays are known; one using a semitransmission plate and the other a holographic optical element. The former type is less easy to read owing to the low contrast between the background image and the information image superimposed on the background image, and is less bright. Accordingly, where a high visibility is required, an HUD using a holographic optical element is widely and advantageously employed. The present invention is particularly suited to use with such a holographic HUD.

In general, the holographic optical element used in the holographic HUD has wavelength characteristics in which the holographic optical element reflects only light of a specific wavelength (wavelength band) and allows light of other wavelengths to pass therethrough. The information light has the selected specific wavelength, and thus the viewer (driver or operator) can observe both the information light reflected by the holographic optical element and the background light transmitted through it. Consequently, the background image which can be viewed through the holographic HUD does not include the color corresponding to the specific wavelength. Thus the background light viewed through the holographic HUD tends to be coloured by a color complementary to the specific wavelength, which gives the background image an unnatural appearance and may cause the viewer to misjudge the color, and accordingly the necessary information.

It is desirable to eliminate the above-mentioned drawback associated with holographic HUDs, i.e. unnatural color of the background.

According to the present invention there is provided a head-up display for simultaneously displaying to a viewer both a background view and an information image emitted at one or more specific wavelengths, including a display for generating the information image, and an optical component comprising means for reflecting the specific wavelength(s) and for allowing other wavelengths to pass through so that the background view can be seen through the optical component; characterised by means for filtering out from the background view one or more wavelength(s) of light corresponding to a complementary color of the specific wavelength(s), the filtered-out wavelength or at least one of the filtered-out wavelengths being different from the said specific wavelength(s).

The reflecting means is preferably a holographic optical element. The holographic element may be given diffraction characteristics by which, in addition to the specific wavelength of the display, a wavelength corresponding to a complementary color of the specific wavelength is also reflected. Alternatively the reflecting means may be an additional optical element which does not allow a wavelength or wavelengths of light corresponding to a complementary color of the specific wavelength to pass through, so that the background light transmitted through the holographic optical element and the information light from the display, of the specific wavelength reflected by the holographic optical element, can be viewed in the same field of view at same time.

It is possible to remove the wavelength of the complementary color either before or after the background light is incident upon the holographic optical element. As a further alternative it is possible to make this removing means integral with the holographic reflector.

When natural light (background light) is incident upon the holographic optical element, only the specific wavelength is reflected or diffracted, so that the light transmitted through the holographic optical element appears colored with a color complementary to the specific wavelength. According to embodiments of the invention, the wavelength or wavelengths of the complementary color is or are removed by the holographic optical element or the additional optical element, and accordingly the background light can be viewed by a viewer in the same field of view as the information light without appearing colored by the complementary color.

In EP-A1-0157958 (MoD) a holographic HUD is shown which provides a color display by using a CRT emitting at two different wavelengths. However, the problem solved by the present invention is not addressed and hence there is no suggestion of the holographic combiner element being tuned to any wavelength other than those used by the display. US 3915548 (Hughes Aircraft) mentions the color problem but makes no suggestion along the lines of the present invention.

Embodiments of the invention will be described below in detail with reference to the accompanying drawings, in which:
Figure 1 is a schematic view of a head-up display according to the present invention;
Fig. 2 is a diagram showing wavelength characteristics of a holographic optical element of a HUD shown in Fig. 1;
Fig. 3 is a schematic view of a head-up display according to another aspect of the present invention;
Fig. 4 is a schematic view of a head-up display according to still another aspect of the present invention;
Figs. 5 and 6 are diagrams showing wavelength characteristics of two holographic optical elements of an HUD shown in Fig. 4;
Fig. 7 is a schematic view of a head-up display according to another aspect of the present invention;
Fig. 8 is a schematic view of a head-up display according to another aspect of the present invention;
Figs. 9 and 10 are diagrams showing wavelength characteristics of two holographic optical elements of a holographic optical element unit shown in Fig. 8;
Figs. 11 and 12 are diagrams showing wavelength characteristics of two holographic optical elements of another holographic optical element unit shown in Fig. 8;
Fig. 13 is a schematic view of a head-up display according to another aspect of the present invention;
Fig. 14 is a schematic view of a head-up display according to another aspect of the present invention;
Figs. 15 and 16 are diagrams showing wavelength characteristics of two holographic optical elements of anHUD shown in Fig. 14;
Fig. 17 is a schematic view of a head-up display according to another aspect of the present invention;
Figs. 18 and 19 are diagrams showing wavelength characteristics of two holographic optical elements of a holographic optical element unit shown in Fig. 17;
Fig. 20 a schematic view of a head-up display according to another aspect of the present invention;
Figs. 21 and 22 are diagrams showing wavelength characteristics of two holographic optical elements of a holographic optical element unit shown in Fig. 20;
Fig. 23 is a schematic view of a known head-up display according to a prior art; and,
Fig. 24 is a diagram showing wavelength characteristics of a holographic optical element of a known HUD shown in Fig. 23.

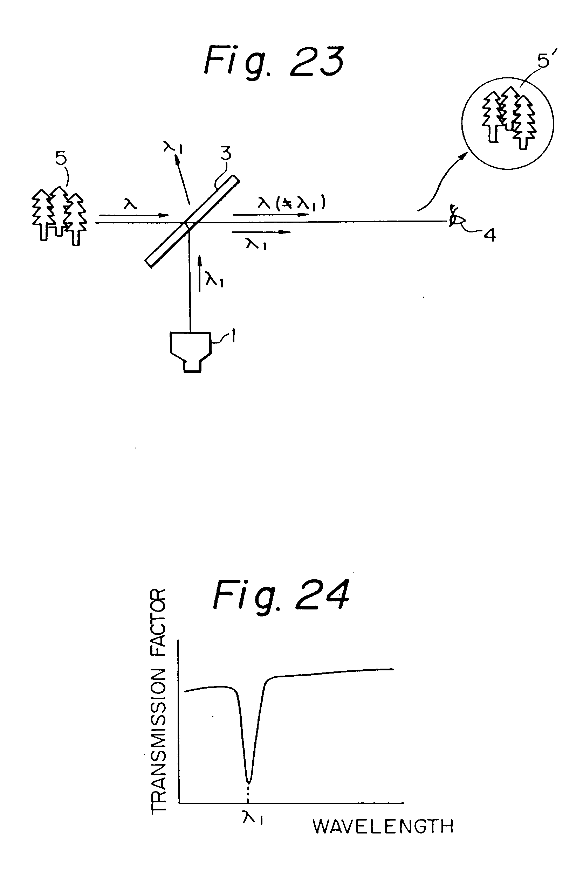

For a better understanding of the present invention, the following discussion will be first directed to the prior art shown in Figs. 23 and 24.

In Fig. 23, information indicated at an information source (e.g., CRT) 1 is represented by a wavelength λ1 and is incident upon a holographic optical element (hologram plate) 3 having wavelength characteristics, as shown in Fig. 24, in which only light of a specific wavelength λ1 is reflected (or diffracted) by the holographic optical element 3. The information light of the wavelength λ1 emitted from the CRT 1 and made incident upon the holographic optical element 3 is reflected by the holographic optical element 3 in a predetermined direction toward the viewer's eyes 4, so that the viewer can observe the information light λ1. On the other hand, since light other than the wavelength λ1 is transmitted through the holographic optical element 3, background light having all wavelengths λ passes through the holographic optical element 3, except for the specific wavelength λ1. Thus all wavelengths λ other than the specific wavelength λ1 (i.e., λ ≠ λ1) are viewed by a viewer, and the specific wavelength λ1 included in the wavelengths λ is reflected by the holographic optical element 3 in the direction away from the CRT1. Accordingly, the viewer can see both the information light and the background light on which the information light is superimposed, in the same field of view at the same time without moving the eyes 4.

Nevertheless, since the background light viewed by the viewer through the holographic optical element 3 does not include the specific wavelength λ1, the background light tends to be colored by a complementary color of the specific wavelength λ1, as mentioned before. For example, if λ1 is around 510 nm (green), the background is unnaturally colored pink. Hence the real background image 5 is viewed as an unnaturally colored background image 5′.

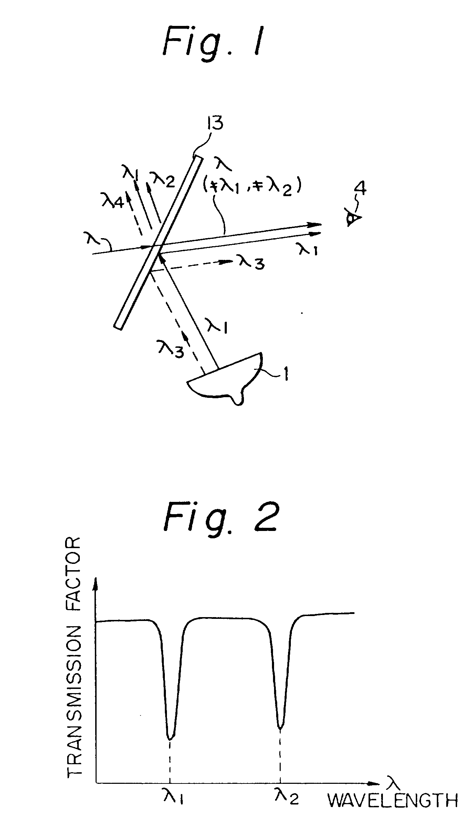

Figure 1 shows a basic arrangement of a HUD of the present invention in which the elements corresponding to those in Fig. 23 are designated by the same reference numerals.

As mentioned above, among the wavelengths λ of the natural light (background light), only the wavelength λ1 is reflected by the holographic optical element and the remaining wavelengths are transmitted therethrough, so that the transmitted light is colored with a complementary color (wavelength λ2) of the specific wavelength λ1. To solve this problem, in the present example the holographic optical element 13 has wavelength characteristics such that two wavelengths λ1 and λ2 of light, which are complementary to each other, are reflected or diffracted thereby and the remaining wavelengths of light are transmitted therethrough, as shown in Fig. 2. For example, if λ1 is about 490 nm, λ2 is about 600 nm.

Therefore, the background light transmitted through the holographic optical element 13 includes all but the two wavelengths λ1 and λ2 complementary to each other, and accordingly, the above-mentioned tendency that the background light is unnaturally colored is eliminated.

Furthermore, since the two specific wavelengths are reflected or diffracted by the holographic optical element 13, it is possible to use either or both of the two colors corresponding to the specific wavelengths for the information light emitted from the CRT 1. Thus more than one choice of color for the display of the necessary information can be made, or a multi-color display can be realized.

The basic idea of the present invention can be extended to more than two specific wavelengths (λ1 and λ2) complementary to each other. It is possible to provide a holographic optical element which reflects or diffracts three or more than three specific wavelengths λ1, λ2, λ3, λ4, etc., using more than two colors for the information light, as shown by the dashed line in Fig. 1. If two wavelengths λ1 and λ3 of the information light are used, the holographic optical element 13 has transmission characteristics (diffraction characteristics) such that the wavelengths λ1 and λ3 as well as the wavelengths λ2 and λ4, which are complementary to the wavelengths λ1 and λ3 respectively, are reflected or diffracted by the holographic optical element 13.

As is well known, the holographic optical element 13 which reflects or diffracts the specific two or more than two wavelengths can be made of a hologram plate having the diffraction characteristics as shown in Fig. 2, and which can be realized by a multiple interference exposure wherein a first hologram which reflects or diffracts only the specific wavelength λ1 is first formed (exposed) and then a second hologram which reflects or diffracts only the specific wavelength λ2 is formed and superimposed on the first hologram.

Alternatively, it is also possible to make the holographic optical element 13 of two separate hologram plates corresponding to the first and second holograms mentioned above, and superimpose one on the other.

Note, the "wavelength" referred to above and hereinafter may cover a certain band of wavelength.

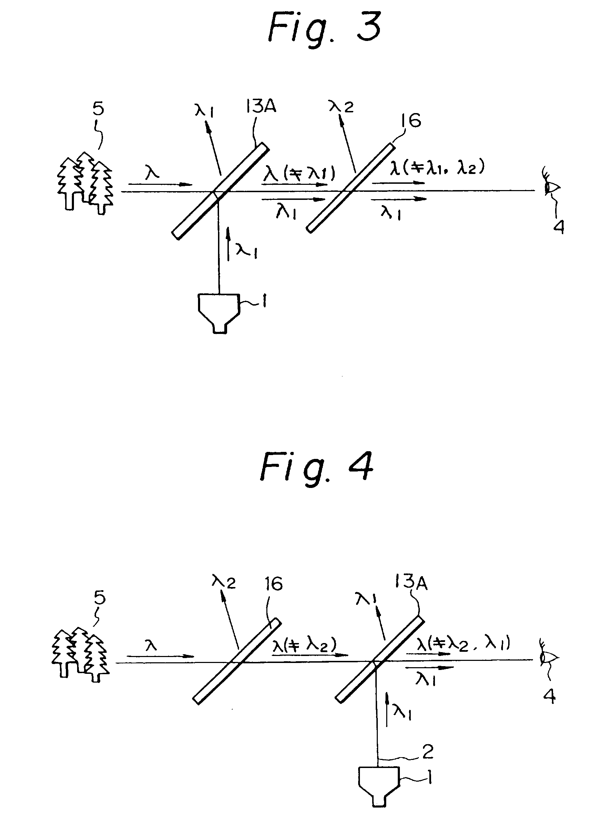

Figure 3 shows a different embodiment of the present invention, in which a holographic optical element 13A and a separate optical element 16 are provided in the light path. The holographic optical element 13A corresponds to the holographic optical element 3 shown in Fig. 23, and has diffraction characteristics, as shown in Fig. 24, such that only the wavelength λ1 is reflected or diffracted by the holographic optical element 13A, and the other wavelengths are transmitted therethrough. The distinctive feature of this embodiment is the provision of the additional optical element 16. The optical element 16 absorbs or reflects the wavelength λ2, which is a complementary color of the wavelength λ1, and allows wavelengths other than λ2 to pass therethrough. In this embodiment, although the light transmitted through the holographic optical element 13A is colored by a complementary color (i.e., wavelength λ2) of the wavelength λ1, as mentioned above, the wavelength λ2 is removed by the optical element 16 provided between the viewer 4 and the holographic optical element 13A.

The optical element 16 is made of a hologram plate which reflects or diffracts only the specific wavelength (e.g., λ2), similar to the holographic optical element 13A, or a wavelength filter which absorbs only the specific wavelength (e.g., λ2).

Figure 4 shows a modified embodiment of Fig. 3. In Fig. 4, the order of the arrangement of the holographic optical element 13A and the additional optical element 16 is opposite to that of Fig. 3. Thus in Fig. 4 the additional optical element 16 is located in front of the holographic optical element 13A, and further from the viewer.

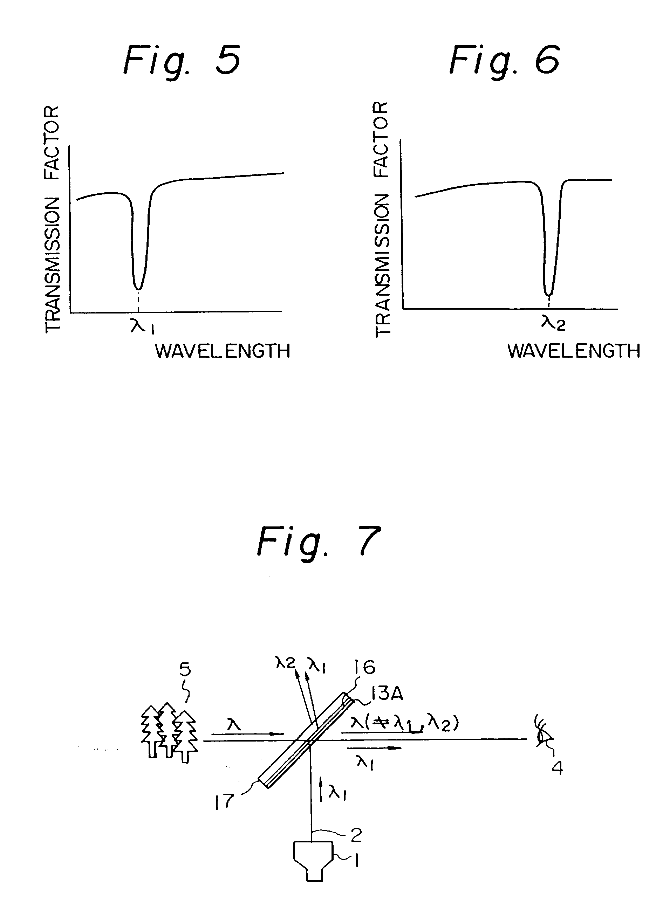

In the embodiment shown in Fig. 4, the complementary color (i.e., wavelength λ2) of the wavelength λ1 is first removed by the optical element 16 and then the wavelength λ1 is removed by the holographic optical element 13A. In the illustrated embodiment, the holographic optical element 13A has diffraction characteristics, as shown in Fig. 5, such that only the wavelength λ1 (e.g., λ1 = 490 nm, green) is reflected or diffracted. Similarly, the optical element 16 has reflection (transmission) characteristics as shown in Fig. 6, such that only the wavelength λ2 (e.g., λ2 = 600 nm, red) is reflected.

The information light 2 (wavelength λ1) emitted from the CRT 1 is reflected (diffracted) by the holographic optical element 13A in the predetermined direction toward the viewer's eyes 4, and as a result, the viewer can see both the information light of the specific wavelength λ1 and the background light which includes neither the specific wavelength λ1 and the wavelength λ2 which is a complementary color of the wavelength λ1, in the same field of view at the same time substantially without moving the eyes. Unlike the prior art, the background is not colored by the complementary color of the information light.

The optical element 16 is not limited to an optical element which reflects the specific wavelength, and can be an optical element which absorbs or damps the specific wavelength.

Figure 7 shows another embodiment of the present invention, in which the optical element 16 is integrally formed on a transparent substrate 17 of the holographic optical element 13A. Since the holographic optical element 13A is made of a hologram formed on the transparent substrate 17, the latter is commonly used for the optical element 16. This embodiment makes the head-up display smaller and simpler.

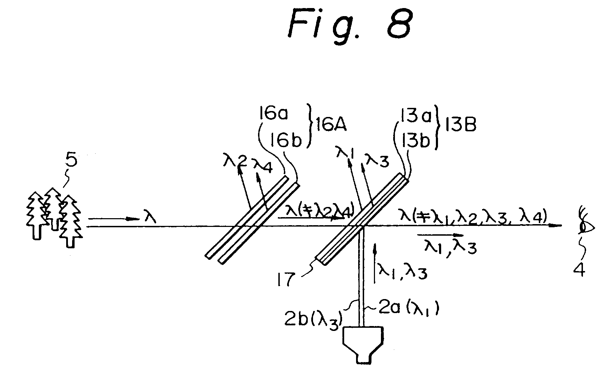

Figure 8 shows still another embodiment of the present invention, in which a plurality of wavelengths λ1 and λ3 (i.e., colors) of the information light 2a, 2b are emitted from the indicator (CRT, etc.) 1. The holographic optical element 13B has two holograms 13a and 13b formed on a common transparent substrate 17 by a multiple interference exposure. Instead of the single holographic optical element 13B, it is possible to use two holographic optical elements superimposed one on the other, and each having a hologram formed on a transparent substrate.

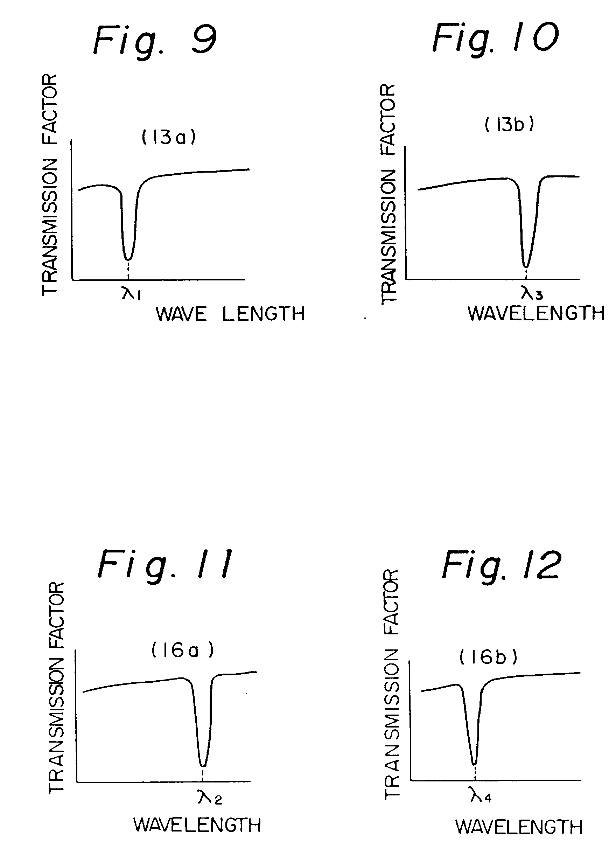

The first hologram 13a has diffraction characteristics such that only the wavelength λ1 (e.g., 490 nm) is reflected (or diffracted), and the other wavelengths are transmitted therethrough, as shown in Fig. 9. The second hologram 13b has diffraction characteristics such that only the wavelength λ3 (e.g., 570 nm) is reflected (or diffracted), and the other wavelengths are transmitted therethrough, as shown in Fig. 10.

On the other hand, the optical element unit 16A has two optical elements 16a and 16b, each corresponding to the optical element 16 shown in Fig. 4. The first optical element 16a has transmission characteristics such that only the wavelength λ2, which is a complementary color of the wavelength λ1, is reflected (or absorbed), and the other wavelengths are transmitted therethrough, as shown in Fig. 11. Similarly, the second optical element 16b has transmission characteristics such that only the wavelength λ4, which is a complementary color of the wavelength λ3, is reflected (or absorbed), and the other wavelengths are transmitted therethrough, as shown in Fig. 12. Thus, the background light transmitted through the optical element 16A does not include the wavelengths λ2 and λ4, and the background light transmitted through the holographic optical element 13B further excludes the wavelengths λ1 and λ3, in addition to the wavelengths λ2 and λ4. Hence the background light is not colored by the complementary colors (wavelengths λ2 and λ4) of the wavelengths λ1 and λ3.

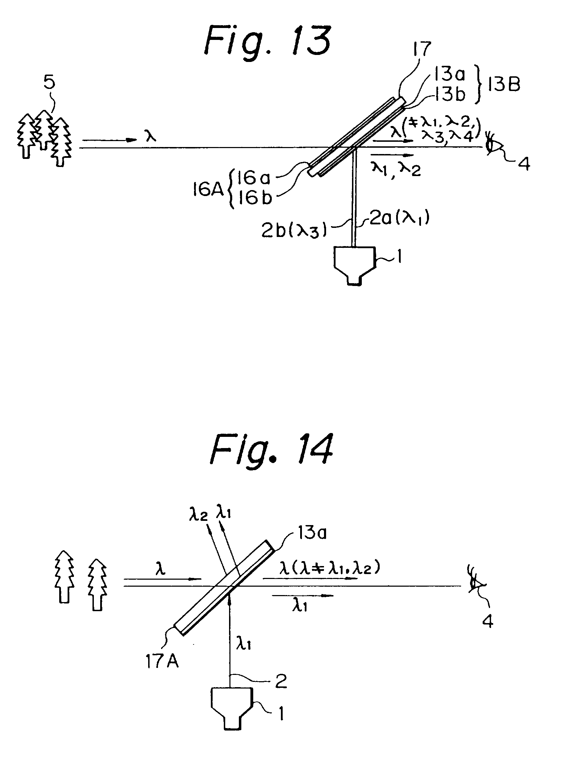

Figure 13 shows a modified embodiment of Fig. 8 and corresponds to the embodiment shown in Fig. 7. In Fig. 13, the first and second holograms 13a and 13b, and the first and second optical elements 16a and 16b are all formed on opposite side faces of a single transparent substrate 17, for simplification and minimization of the device, as in the embodiment illustrated in Fig. 7.

It will be easily understood that the embodiments shown in Figs. 8 and 13 can be applied to more than two information colors 2a, 2b. A multi-color display having more than two colors can be easily realized by increasing the number of the holographic optical elements 13a, 13b, etc., and the optical elements 16a, 16b, etc.

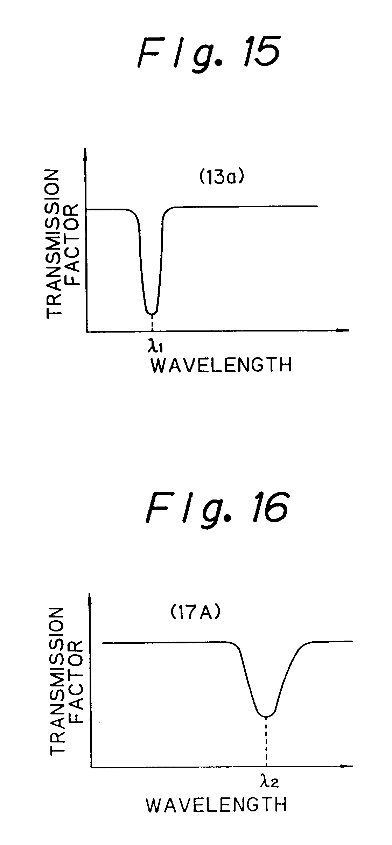

Figures 14 to 16 show another embodiment of the present invention, in which the holographic optical element unit has a hologram 13a which diffracts the wavelength λ1 (Fig. 15) and a substrate (e.g. colored glass) 17A which does not permit light of wavelength λ2, which is complementary to the wavelength λ1, to pass therethrough (Fig. 16). The substrate 17A can be a diffuser which diffuses light or a filter which absorbs light of the specific wavelength λ2. The hologram 13a can be formed on the substrate 17A which serves as a hologram substrate.

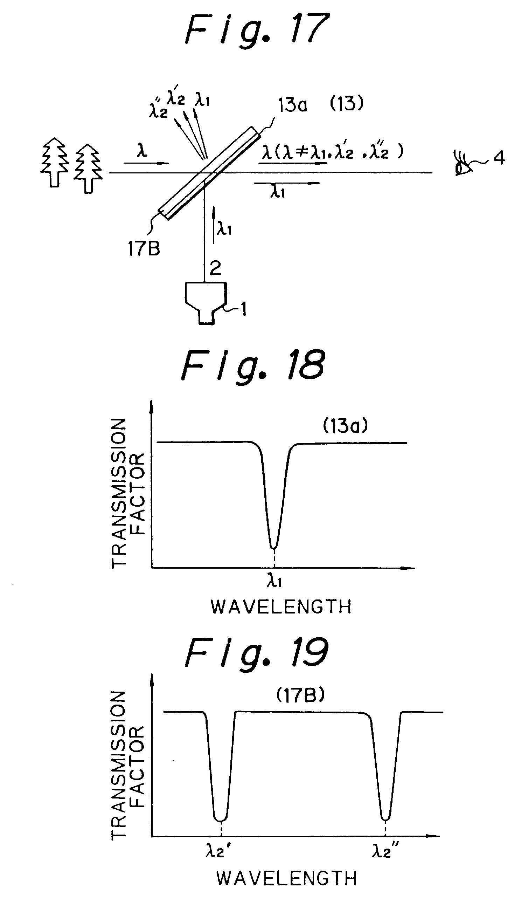

Figures 17 to 19 show another embodiment of the present invention. As is well known, a case occurs in which no single wavelength λ2 complementary to the wavelength λ1, which is diffracted, for example, by the holographic optical element 13 (Fig. 1) or the hologram 13a (Fig. 14), exists. For example, if λ1 is about 493 nm - 570 nm, there is no single wavelength λ2 complementary thereto. In this case, the "wavelength" λ2 is defined, for example, by a combination of two wavelengths λ2' and λ2". For example, when λ1 is 510 nm (λ1 = 510 nm), λ2' and λ2" are 460 nm and 630 nm, respectively (λ2' = 460 nm, λ2" = 630 nm). The optical means for removing the wavelengths λ2' and λ2" can be constituted by a holographic optical element 17B having two multi-exposed holograms which reflect or diffract the wavelengths λ2' and λ2" respectively, or two independent holographic optical elements which reflect or diffract the wavelengths λ2' and λ2" respectively, or a non-holographic optical element (or elements) which absorbs or reflects the wavelengths λ2' and λ2".

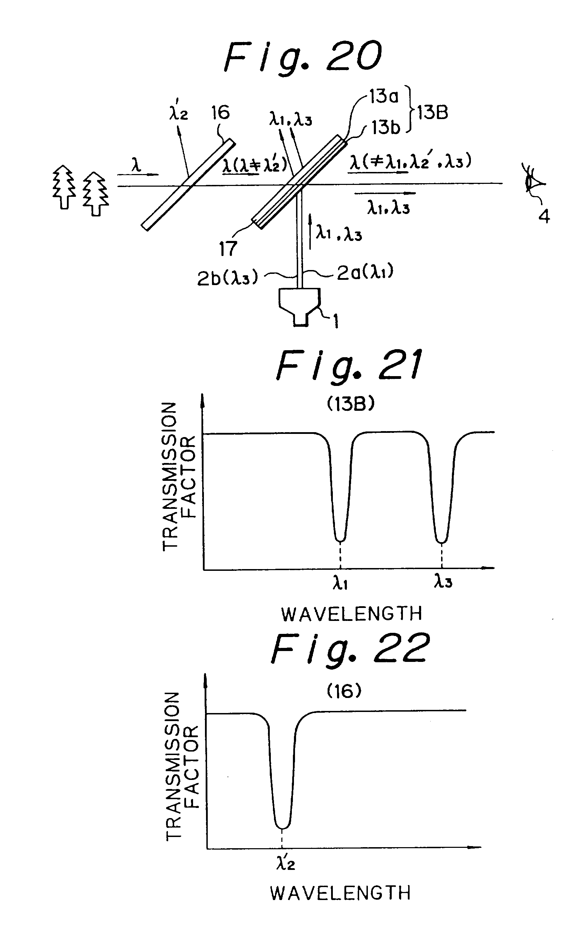

Figures 20 to 22 show still another embodiment of the present invention, which is a modification of the embodiment of Fig. 8. In this embodiment, a plurality of wavelengths λ1 and λ3 of the information light 2a, 2b are emitted from the indicator (CRT, etc.) 1. The holographic optical element 13B has two holograms 13a and 13b formed on the common transparent substrate 17; the first hologram 13a reflects or diffracts the wavelength λ1 and permits the other wavelengths to pass therethrough, and the second hologram 13b reflects or diffracts the wavelength λ3 and permits the other wavelengths to pass therethrough.

If a single wavelength complementary to the wavelengths λ1 and λ3 exists, i.e., if a color complementary to the composite color of the wavelengths λ1 and λ3 is defined by a wavelength λ2', the optical element 16 removes the wavelength λ2'. The optical element 16 can be made of a hologram which reflects (or diffracts) the wavelength λ2' and permits the other wavelengths to pass therethrough, or a non-holographic optical element, such as a filter which absorbs only the wavelength λ2', can be used.

In the embodiment illustrated in Figs. 20 to 22, for example, λ1 = 540 nm, λ3 = 600 nm, λ2' = 440 nm.

## Claims

1. A head-up display for simultaneously displaying to a viewer both a background view and an information image emitted at one or more specific wavelengths ( λ₁, λ₃), including a display (1) for generating the information image, and an optical component comprising means (13) for reflecting the specific wavelength(s) (λ₁, λ₃) and for allowing other wavelengths to pass through so that the background view can be seen through the optical component;
characterised by means for filtering out from the background view one or more wavelength(s) (λ₂, λ₄) of light corresponding to a complementary color of the specific wavelength(s) (λ₁, λ₃), the filtered-out wavelength or at least one of the filtered-out wavelengths being different from the said specific wavelength(s).

2. A head-up display according to claim 1, in which the reflecting means (13) comprises a holographic optical element.

3. A head-up display according to claim 2, in which the holographic optical element (13) has diffraction characteristics such that it reflects the wavelength(s) (λ₂, λ₄) corresponding to a complementary color of the specific wavelength(s) (λ₁, λ₃) in addition to the specific wavelength(s), so that the holographic element itself constitutes the said wavelength-removing means.

4. A head-up display according to claim 2 or 3, wherein the holographic optical element (13) is a hologram plate.

5. A head-up display according to claim 1 or 2, in which the means for filtering out the complementary wavelength(s) comprises an additional optical element (16) which does not allow the passage of light of wavelength(s) (λ₂, λ₄) corresponding to the complementary color of the specific wavelength(s) (λ₁, λ₃).

6. A head-up display according to claim 5, wherein the additional optical element (16) reflects and/or absorbs light at the filtered-out wavelength(s) (λ₂, λ₄).

7. A head-up display according to claim 5 or 6, wherein the holographic optical element (13) and the additional optical element (16) are formed on a common transparent substrate (17).

8. A head-up display according to claim 5 or 6, wherein the additional optical element (16) is located in front of and/or behind the holographic optical element (13).

9. A head-up display according to claim 5, wherein the holographic optical element (13) comprises a hologram which reflects only the said specific wavelength(s) (λ₁, λ₃), and the additional optical element (16) comprises a substrate (17A) on which the hologram is formed and which filters out the said complementary wavelength(s) (λ₂, λ₄) and permits the other wavelengths to pass through.

10. A head-up display according to any preceding claim, wherein the color complementary to the or a specific wavelength (λ₁) is a combination of two wavelengths (λ'₂, λ"₂) which are filtered out by the removing means (Fig. 17), or is a single wavelength (λ₂) complementary to a combination of two specific wavelengths (λ₁, λ₃) to be reflected by the reflecting means (13).

11. A head-up display according to claim 5, in which the display emits light at two or more specific wavelengths and the holographic optical element (13) is made of a corresponding number of holograms formed on a transparent substrate.

12. A head-up display according to claim 5, in which the display emits light at two or more specific wavelengths are used and the holographic optical element (13) is made of a corresponding number of holographic plates, each having a hologram formed on a transparent substrate.

13. A head-up display according to claim 6, in which the display emits light at two or more specific wavelengths and the additional element is made of a plurality of optical plates which reflect and/or absorb light at the filtered-out complementary wavelengths.

14. A head-up display according to any preceding claim, in which the optical component allows passage of all display wavelengths other than the specific wavelength(s).

## Patentansprüche

1. Projizierte Frontscheiben-Anzeige, um für einen Betrachter gleichzeitig sowohl eine Hintergrundansicht als auch ein Informationsbild darzustellen, welches in einer oder mehreren spezifischen Wellenlängen (λ₁, λ₃) emittiert wird, mit einer Anzeigevorrichtung (1) zum Erzeugen des Informationsbildes und mit einer optischen Komponente, die eine Einrichtung (13) enthält, um die spezifische Wellenlänge(n) (λ₁, λ₃) zu reflektieren und um die anderen Wellenlängen hindurchzulassen, so daß die Hintergrundansicht durch die optische Komponente hindurch gesehen werden kann,
**gekennzeichnet** durch eine Einrichtung, um aus der Hintergrundansicht eine oder mehrere Wellenlänge(n) (λ₂,λ₄) des Lichtes auszufiltern, welches einer komplementären Farbe der spezifischen Wellenlänge(n) (λ₁,λ₃) entspricht bzw. entsprechen, wobei die ausgefilterte Wellenlänge oder wenigstens eine der ausgefilterten Wellenlängen von der bzw. den spezifischen Wellenlänge(n) verschieden ist.

2. Projizierte Frontscheiben-Anzeige nach Anspruch 1, bei der die reflektierende Einrichtung (13) ein holographisches optisches Element umfaßt.

3. Projizierte Frontscheiben-Anzeige nach Anspruch 2, bei der das holographische optische Element (13) BeugungsEigenschaften in solcher Weise besitzt, daß es die Wellenlänge(n) (λ₂, λ₄), die einer komplementären Farbe der spezifischen Wellenlänge(n) (λ₁, λ₃) entspricht bzw. entsprechen, zusätzlich zu der bzw. den spezifischen Wellenlänge (n) reflektiert, so daß das holographische Element selbst die die Wellenlänge entfernende Einrichtung darstellt.

4. Projizierte Frontscheiben-Anzeige nach Anspruch 2 oder 3, bei der das holographische optische Element (13) eine Hologramm-Platte ist.

5. Projizierte Frontscheiben-Anzeige nach Anspruch 1 oder 2, bei der die Einrichtung zum Ausfiltern der komplementären Wellenlänge(n) ein zusätzliches optisches Element (16) umfaßt, welches den Durchtritt von Licht der Wellenlänge(n) (λ₂, λ₄) entsprechend der komplementären Farbe der spezifischen Wellenlänge(n) (λ₁, λ₃) nicht erlaubt.

6. Projizierte Frontscheiben-Anzeige nach Anspruch 5, bei der das zusätzliche optische Element (16) Licht bei der bzw. den ausgefilterten Wellenlänge(n) (λ₂, λ₄) reflektiert und/oder absorbiert.

7. Projizierte Frontscheiben-Anzeige nach Anspruch 5 oder 6, bei der das holographische optische Element (13) und das zusätzliche optische Element (16) auf einem gemeinsamen transparenten Substrat (17) ausgebildet sind.

8. Projizierte Frontscheiben-Anzeige nach Anspruch 5 oder 6, bei der das zusätzliche optische Element (16) vor dem und/oder hinter dem holographischen optischen Element (13) gelegen ist.

9. Projizierte Frontscheiben-Anzeige nach Anspruch 5, bei der das holographische optische Element (13) ein Hologramm aufweist, welches lediglich die spezifische Wellenlänge(n) (λ₁, λ₃) reflektiert und bei dem das zusätzliche optische Element (16) ein Substrat (17A) umfaßt, auf dem das Hologramm ausgebildet ist, und welches die komplementäre(n) Wellenlänge(n) (λ₂, λ₄) ausfiltert und den Durchgang anderer Wellenlängen erlaubt.

10. Projizierte Frontscheiben-Anzeige nach irgendeinem der vorhergehenden Ansprüche, bei der die Farbe, die komplementär zu der oder einer spezifischen Wellenlänge (λ₁) ist, aus einer Kombination von zwei Wellenlängen (λ'₂, λ"₂) besteht, die durch die Entfernungseinrichtung (Fig.17) ausgefiltert werden, oder aus einer einzelnen Wellenlänge (λ₂) besteht, die komplementär zu einer Kombination aus zwei spezifischen Wellenlängen (λ₁, λ₃) ist, welche durch die reflektierende Einrichtung (13) reflektiert werden sollen.

11. Projizierte Frontscheiben-Anzeige nach Anspruch 5, bei der die Anzeigevorrichtung Licht in zwei oder mehreren spezifischen Wellenlängen emittiert, und bei der das holographische optische Element (13) aus einer entsprechenden Anzahl von Hologrammen gebildet ist, die auf einem transparenten Substrat ausgebildet sind.

12. Projizierte Frontscheiben-Anzeige nach Anspruch 5, bei der die Anzeigevorrichtung Licht bei zwei oder mehreren spezifischen Wellenlängen emittiert, und bei der das holographische optische Element (13) aus einer entsprechenden Anzahl von holographischen Platten hergestellt ist, von denen jede ein Hologramm aufweist, welches auf einem transparenten Substrat ausgebildet ist.

13. Projizierte Frontscheiben-Anzeige nach Anspruch 6, bei der die Anzeigevorrichtung Licht bei zwei oder mehreren spezifischen Wellenlängen emittiert, und bei der das zusätzliche Element aus einer Vielzahl von optischen Platten gebildet ist, die Licht bei den ausgefilterten komplementären Wellenlängen reflektieren und/oder absorbieren.

14. Projizierte Frontscheiben-Anzeige nach irgendeinem der vorhergehenden Ansprüche, bei der die optische Komponente den Durchgang aller Anzeige-Wellenlängen erlaubt, die von der bzw. den spezifischen Wellenlänge(n) verschieden sind.

## Revendications

1. Dispositif d'affichage tête haute destiné à l'affichage simultané, pour un observateur, à la fois d'une vue d'un fond et d'une image d'informations émise à une ou plusieurs longueurs d'onde particulières (λ₁, λ₃), comprenant un dispositif d'affichage (1) destiné à créer l'image d'informations, et un composant optique qui comporte un dispositif (13) destiné à réfléchir la longueur d'onde ou les longueurs d'onde particulières (λ₁, λ₃) et à permettre le passage des autres longueurs d'onde si bien que la vue du fond peut être observée à travers le composant optique,
caractérisé par un dispositif destiné à supprimer par filtrage du fond une ou plusieurs longueurs d'onde (λ2, λ4) de la lumière correspondant à une couleur complémentaire des longueurs d'onde particulières (λ₁, λ₃), la longueur d'onde retirées par filtrage ou au moins l'une des longueurs d'onde retirée par filtrage étant différente des longueurs d'onde particulières.

2. Dispositif d'affichage tête haute selon la revendication 1, dans lequel le dispositif réfléchissant (13) est un élément optique holographique.

3. Dispositif d'affichage tête haute selon la revendication 2, dans lequel l'élément optique holographique (13) a des caractéristiques de diffraction telles qu'il réfléchit les longueurs d'onde (λ₂, λ₄) correspondant à une couleur complémentaire des longueurs d'onde particulières (λ₁, λ₃) en plus des longueurs d'onde particulières, si bien que l'élément holographique lui-même constitue le dispositif d'extraction des longueurs d'onde.

4. Dispositif d'affichage tête haute selon la revendication 2 ou 3, dans lequel l'élément optique holographique (13) est une plaque portant une hologramme.

5. Dispositif d'affichage tête haute selon la revendication 1 ou 2, dans lequel le dispositif de suppression par filtrage des longueurs d'onde complémentaires comprend un élément optique supplémentaire (16) qui ne permet pas le passage de la lumière aux longueurs d'onde (λ₂, λ₄) qui correspondent à la couleur complémentaire des longueurs d'onde particulières (λ₁, λ₃).

6. Dispositif d'affichage tête haute selon la revendication 5, dans lequel l'élément optique supplémentaire (16) réfléchit et/ou absorbe la lumière aux longueurs d'onde retirées par filtrage (λ₂, λ₄).

7. Dispositif d'affichage tête haute selon la revendication 5 ou 6, dans lequel l'élément optique holographique (13) et l'élément optique supplémentaire (16) sont formés sur un substrat transparent commun (17).

8. Dispositif d'affichage tête haute selon la revendication 5 ou 6, dans lequel l'élément optique supplémentaire (16) est placé en avant et/ou en arrière de l'élément optique holographique (13).

9. Dispositif d'affichage tête haute selon la revendication 5, dans lequel l'élément optique holographique (13) est un hologramme qui réfléchit uniquement les longueurs d'onde particulières (λ₁, λ₃) et l'élément optique supplémentaire (16) comporte un substrat (17A) sur lequel est formé l'hologramme et qui retire par filtrage les longueurs d'onde complémentaires (λ₂, λ₄) et permet le passage des autres longueurs d'onde.

10. Dispositif d'affichage tête haute selon l'une quelconque des revendications précédentes, dans lequel la couleur complémentaire de la longueur d'onde ou d'une longueur d'onde particulière (λ₁) est une combinaison de deux longueurs d'onde (λ'₂, λ"₂) qui sont retirées par filtrage par le dispositif d'extraction (figure 17), ou une seule longueur d'onde (λ₂) complémentaire d'une combinaison de deux longueurs d'onde particulières (λ₁, λ₃) qui doit être réfléchie par le dispositif réfléchissant (13).

11. Dispositif d'affichage tête haute selon la revendication 5, dans lequel le dispositif d'affichage émet de la lumière à au moins deux longueurs d'onde particulières, et l'élément optique holographique (13) est formé d'un nombre correspondant d'hologrammes réalisés sur un substrat transparent.

12. Dispositif d'affichage tête haute selon la revendication 5, dans lequel le dispositif d'affichage émet de la lumière à au moins deux longueurs d'onde particulières et l'élément optique holographique (13) est formé d'un nombre correspondant de plaques holographiques ayant chacune un hologramme formé sur un substrat transparent.

13. Dispositif d'affichage tête haute selon la revendication 6, dans lequel le dispositif d'affichage émet de la lumière à au moins deux longueurs d'onde particulières, et l'élément supplémentaire est formé de plusieurs plaques optiques qui réfléchissent et/ou absorbent la lumière aux longueurs d'onde complémentaires retirées par filtrage.

14. Dispositif d'affichage tête haute selon l'une quelconque des revendications précédentes, dans lequel l'élément optique permet le passage de toutes les longueurs d'onde de l'affichage autres que les longueurs d'onde particulières.
